(19) Europäisches Patentamt
European Patent Office
Office européen des brevets

(11) Veröffentlichungsnummer: **0 034 771**
**B1**

(12) # EUROPÄISCHE PATENTSCHRIFT

(45) Veröffentlichungstag der Patentschrift: **23.11.83**

(51) Int. Cl.³: **B 01 F 17/00,** C 09 B 67/46, D 06 L 3/12, C 09 D 17/00

(21) Anmeldenummer: **81101013.1**

(22) Anmeldetag: **13.02.81**

(54) **Hochkonzentrierte, lagerstabile und wärmebeständige, fliessfähige, wässrige Dispersion von in Wasser schwer- bis unlöslichen Wirksubstanzen, Verfahren zur Herstellung der Dispersion, Verfahren zum Veredeln von Kunststoffen, Papier oder Textilien sowie veredelte Kunststoffe, veredeltes Papier oder veredelte Textilien.**

(30) Priorität: **22.02.80 CH 1454/80**

(43) Veröffentlichungstag der Anmeldung: **02.09.81 Patentblatt 81/35**

(45) Bekanntmachung des Hinweises auf die Patenterteilung: **23.11.83 Patentblatt 83/47**

(84) Benannte Vertragsstaaten: **DE FR GB IT**

(56) Entgegenhaltungen:
**BE - A - 634 844**
**CH - A - 415 913**
**FR - A - 2 258 438**
**FR - A - 2 323 435**
**GB - A - 835 637**
**GB - A - 2 007 111**
**US - A - 2 971 812**
**US - A - 4 006 025**
**US - E - 21 402**

(73) Patentinhaber: **Rohner AG Pratteln, Gempenstrasse 6, CH-4133 Pratteln (CH)**

(72) Erfinder: **Kirner, Hans Dieter, Dr., Wartenbergstrasse 35, CH-4133 Pratteln (CH)**
Erfinder: **Wegmann, Jacques, Dr., Bückenweg 22, CH-4126 Bettingen (CH)**

(74) Vertreter: **Becher, Pauline, Dr. et al, A. Braun, Braun, Héritier, Eschmann AG Holbeinstrasse 36-38, CH-4051 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Hochkonzentrierte, lagerstabile und wärmebeständige, fliessfähige, wässrige Dispersion von in Wasser schwer- bis unlöslichen Wirksubstanzen, Verfahren zur Herstellung der Dispersion, Verfahren zum Veredeln von Kunststoffen, Papier oder Textilien sowie veredelte Kunststoffe, veredeltes Papier oder veredelte Textilien

Die vorliegende Erfindung betrifft hochkonzentrierte, lagerstabile und wärmebeständige, fliessfähige, wässrige Dispersionen von in Wasser schwerlöslichen bis unlöslichen Wirksubstanzen, ein Verfahren zur Herstellung der Dispersionen durch Nassmahlen und ein Verfahren zum Veredeln von Kunststoffen, Papier und Textilien unter Verwendung der Dispersionen sowie die so erhaltenen veredelten Produkte.

Hochkonzentrierte wässrige Dispersionen haben infolge ihrer anerkannten Vorteile, insbesondere ihrer leichten Anwendbarkeit, steigende Bedeutung als Handelsformen für zahlreiche in Wasser schwer- bis unlösliche Wirksubstanzen. Allerdings werden an solche Dispersionen besonders hohe Anforderungen bezüglich der Lagerbeständigkeit, der Widerstandsfähigkeit gegen Kälte und gegen Wärme sowie der Transportierbarkeit gestellt. Gegenüber Pulverpräparaten weisen sie vor allem den Vorteil auf, dass die Wirksubstanzen bereits in dispergierter Form vorliegen und deshalb bei der Formulierung ein vergleichsweise geringer Gehalt an Dispergier- und Stabilisierungsmitteln eingesetzt werden kann.

Wässrige Dispersionen von festen oder flüssigen Produkte, insbesondere synthetischen Harzen, die als Schutzkolloide Copolymere von N-Vinyl-lactamen mit Vinylestern aliphatischer Carbonsäuren mit bis zu 4 Kohlenstoffatomen enthalten, sind bekannt (GB-A-890 691). Als Schutzkolloide wurden schon natürliche Produkte, wie Casein, Alginate und Cellulosederivate, oder vollsynthetische Produkte, wie Polyvinylalkohol oder Polyvinylpyrrolidon, vorgeschlagen. Die Verwendung der zuletzt genannten Polymeren als Schutzkolloide für Pigmentdispersionen wurde beispielsweise in der GB-A-835 637 beansprucht. Allerdings wurden hohe Mengen von 10 bis 100%, bezogen auf das Pigment, eingesetzt.

Dispersionen von Küpenfarbstoffen, die geringe Mengen Poly-N-vinyl-2-pyrrolidon in der Grössenordnung von 0,2 bis 3% als Schutzkolloid enthalten, sind in der US-A-2 971 812 beschrieben. Die Küpenfarbstoffkonzentrationen in den Formulierungen liegen nur zwischen 6 und 20%. Die Dispersionen bleiben flüssig, und ihre Viskosität ändert sich auch nach längerer Lagerzeit nicht. In der genannten US-Patentschrift wird auch darauf hingewiesen, dass fakultativ bekannte anionische Dispergiermittel, wie Ligninsulfonate oder Kondensationsprodukte von Naphthalinsulfonsäuren mit Formaldehyd, zugesetzt werden können, wodurch die Resultate in einzelnen Fällen noch verbessert werden. Die Kombination von Poly-N-vinyl-2-pyrrolidon und anionischen Dispergiermitteln vom Typ der Naphthalinsulfonsäure-Formaldehyd-Kondensationsprodukte ist auch in der FR-A-76-27 591 neben zahlreichen anderen Kombinationen ausdrücklich erwähnt.

Wenn auch unter Berücksichtigung der an Handelsformen gestellten Anforderungen die in der oben erwähnten US-A-2 971 812 vorgeschlagene fakultative Kombination von Poly-N-vinyl-2-pyrrolidon und Dispergiermitteln, wie Ligninsulfonat, am besten geeignet erscheint, lässt sie doch noch gewisse Wünsche offen; insbesondere wird die Thixotropie zwar bei Raumtemperatur beseitigt, tritt jedoch bei erhöhter Temperatur von beispielsweise 40 bis 60°C erneut in Erscheinung. Die Viskosität derartiger Dispersionen steigt deshalb bei erhöhter Temperatur stark an; nach dem Erkalten müssen sie daher mittels Hochleistungsrührwerken wieder regeneriert (d.h. fliessfähig gemacht) werden. Wenn die Dispersionen in Kannen abgefüllt sind, stösst dies jedoch auf beträchtliche Schwierigkeiten. Anionische Dispergiermittel, wie Ligninsulfonate und Naphthalinsulfonsäure-Formaldehyd-Kondensationsprodukte, verursachen zudem in der Applikation von Farbstoffen Schwierigkeiten.

Aus der GB-A-2 007 111 sind hochkonzentrierte, stabile, fliessfähige wässrige Dispersionen bekannt, die

a) 30 bis 60 Gew.-% eines diazotierbaren aromatischen Amins, das elektrophile Substituenten trägt und eine Teilchengrösse unter 10 $\mu$m hat,

b) 0,1 bis 5 Gew.-% eines wasserlöslichen Poly-N-vinyllactams oder eines wasserlöslichen Copolymeren mindestens zweier verschiedener N-Vinyllactame oder eines wasserlöslichen Copolymeren mindestens eines N-Vinyllactams mit mindestens einer anderen Verbindung, die mit dem N-Vinyllactam copolymerisiert werden kann,

c) 0,1 bis 5 Gew.-% eines anionischen Dispergiermittels,

d) 0 bis 30 Gew.-% mindestens einer hydrotropen Verbindung und/oder mindestens einer den Gefrierpunkt senkenden Verbindung und

e) Wasser enthalten. Zwar sind die Komponenten b und e dieser Dispersionen mit den Komponenten b und e der erfindungsgemässen Dispersionen praktisch identisch, doch ist die Komponente c der Dispersion nach der GB-A-2 007 111 ein anionisches Dispergiermittel, während die Komponente c der erfindungsgemässen Dispersion keinen Dispergiermittelcharakter hat.

Insbesondere bei Formulierungen einer Reihe der in der Eisfarbentechnik in grossem Umfang benötigten diazotierbaren aromatischen Amine zeigt sich in Kombination mit anionischen Dispergiermitteln eine gewisse Unverträglichkeit, indem sich beim Diazotieren Niederschläge bilden. Auch haben anionische Dispergiermittel im Textildruck bei Verwendung körperarmer Verdickungsmittel, wie z.B. solche auf Basis der Polyacrylsäure, einen ungünstigen Einfluss, indem sie die Viskosität der Druckpasten erniedrigen. Beim Färben und Bedrucken von Mischtextilien von aromatischen Polyestern mit Cellulosefasern werden häufig Kombinationen aus wasserlöslichen Reaktivfarbstoffen und Dispersionsfarbstoffen verwendet; die letzteren verursachen in diesem Fall, wenn die Formulierungen anionische Dispergiermittel enthalten, eine deutliche Beeinträchtigung des Fixierungsgrades der Reaktivfarbstoffe auf dem Celluloseanteil.

Es wurde nun gefunden, dass die genannten unerwünschten Eigenschaften solcher Dispersionen überraschenderweise beseitigt werden können,

ohne dass die erwünschten Vorteile geschmälert werden, wenn man den wässrigen Dispersionen von in Wasser schwer bis unlöslichen Wirksubstanzen neben geringen Mengen an Polymeren oder Copolymeren von N-Vinyl-lactamen, wie Poly-N-vinyl-2--pyrrolidon, noch zusätzlich kleine Mengen an wasserlöslichen, niedermolekularen anionischen Verbindungen zusetzt, die keinen Dispergiermittelcharakter haben, daher nicht schäumen und auch keinen nachteiligen Einfluss auf die Anwendungseigenschaften ausüben. Die Wirksamkeit dieser Kombination ist um so überraschender, als Schutzkolloide bis jetzt zur Stabilisierung wässriger Dispersionen immer in Kombination mit Komponenten, die eindeutigen Dispergiermittelcharakter haben, verwendet wurden, sofern überhaupt zusätzliche Komponenten verwendet wurden. Die erfindungsgemässen Dispersionen lassen sich besonders hochkonzentriert herstellen und verlieren ihre Wärmebeständigkeit, d.h. ihre Fliessfähigkeit, auch bei diesen aussergewöhnlich hohen Wirksubstanzkonzentrationen nicht.

Die erfindungsgemässe Dispersion ist im Patentanspruch 1 definiert.

Als anionische Verbindungen, die nicht der Klasse der Dispergiermittel zuzuordnen sind, kommen beispielsweise Tetrahydronaphthalinsulfonate und Octahydroanthracensulfonate, sowie Benzol- und Naphthalinsulfonate, insbesondere deren kurzkettige Alkylderivate, wie Natriumtoluolsulfonat, Natriumäthyl-, -isopropyl- und -isobutylnaphthalinsulfonat, in Frage. Auch die entsprechenden Salze von Aminen können verwendet werden. Einzelne der genannten anionischen Verbindungen haben zwar Netzmittelcharakter, doch sind sie alle keine Dispergiermittel. Die Arylsulfonate sollen vorzugsweise keine Substituenten mit Ausnahme von Alkylresten enthalten; insbesondere wirken zusätzliche Gruppen, wie Nitrogruppen und Carboxylgruppen, schädlich. Die anionischen Verbindungen müssen wasserlöslich sein. Sie werden in geringen Mengen von 0,1 bis 5 Gew.-%, vorzugsweise 0,5 bis 2 Gew.-%, verwendet. Diese geringen Mengen genügen bereits, um eine optimale Wirkung zu erzielen.

Die als Komponente b) verwendeten Polymeren oder Copolymeren von N-Vinyl-lactamen werden ebenfalls in geringen Mengen von 0,1 bis 5 Gew.-%, vorzugsweise 0,5 bis 2 Gew.-%, verwendet. Diese Mengen genügen ebenfalls, um die volle Wirkung zu erzielen. Besonders geeignet sind Polymere von N-Vinylpyrrolidon mit einem Molekulargewicht von 20 000 bis 100 000. Sie können gegebenenfalls alkyliert sein.

Um die Dispersionen vor Austrocknung und speziell auch gegen Einwirkung tiefer Temperaturen von beispielsweise −20°C, wie sie beim Transport auftreten können, zu schützen, enthalten sie vorzugsweise gefrierpunkterniedrigende Verbindungen und Wasserrückhaltemittel. Je nach der Wirksubstanzkonzentration genügen in der Regel Mengen von 10 bis 30 Gew.-%. Zahlreiche gefrierpunkterniedrigende hydrotrope Substanzen, wie Harnstoff, können gleichzeitig als Wasserrückhaltemittel verwendet werden. Am besten eignen sich jedoch Polyole und Polyoläther. Als solche seien genannt: Äthylenglykol, Propylenglykol, Dipropylenglykol, Diäthylenglykol, der Diäthyläther von Äthylenglykol, Glycerin, Pentaerythrit und Sorbit.

Die in Wasser schwer- bis unlöslichen Wirksubstanzen liegen in Mengen von 30 bis 60 Gew.-% vor und haben eine mittlere Teilchengrösse unter 5 µm, vorzugsweise unter 1 µm, damit sie sich auch bei längerem Lagern nicht absetzen. Die erforderliche Teilchengrösse wird vorteilhaft durch Zerkleinerung in Gegenwart der anionischen Verbindung, des Polymeren oder Copolymeren des N-Vinyl-lactams und gegebenenfalls des Wasserrückhaltemittels in einer Rührwerkskugelmühle erreicht. Dabei können Mahlkörper aus Glas, Porzellan, Keramik, Metall oder natürlicher Sand verwendet werden.

Als in Wasser schwer- bis unlösliche Wirksubstanzen kommen beispielsweise organische oder anorganische Pigmente, Dispersionsfarbstoffe, Küpenfarbstoffe, diazotierbare Basen und kupplungsfähige Naphthole, sowie optische Aufheller in Betracht. Weitere Wirksubstanzen, die in den erfindungsgemässen Dispersionen enthalten sein können, sind Kunststoffe, Veredlungsmittel für Kunststoffe und Textilien, wie Antioxidantien, Lichtschutzmittel sowie Flammschutzmittel, Pharmazeutika und Agrochemikalien, wie Insektizide und Herbizide.

In einzelnen Fällen, bei Farbstoffen z.B., kann es von Vorteil sein, die Wirksubstanzen einer Vorbehandlung zu unterwerfen, um besonders hochkonzentrierte Dispersionen herstellen zu können. Solche Vorbehandlungen sind z.B. die Behandlung bei hoher Temperatur, gegebenenfalls unter Druck, in wässrigem Medium, das Umkristallisieren aus Lösungsmitteln oder das Resinieren, d.h. das Vorbehandeln eines Rohfarbstoffes mit einem Säureharz.

Die folgenden Beispiele erläutern die Erfindung, ohne sie jedoch zu beschränken. Teile sind Gewichtsteile, Prozentangaben beziehen sich auf das Gewicht.

*Beispiel 1*

50 Teile 1-Amino-2-phenoxy-4-hydroxyanthrachinon werden in einer Rührwerkskugelmühle in Gegenwart von 100 Teilen Glaskugeln von ca. 2 mm Durchmesser in einer Lösung von 20 Teilen 70%iger, wässriger d-Sorbitlösung und 2 Teilen Poly-N-vinyl--2-pyrrolidon mit einem mittleren Molekulargewicht von 30 000 in 26 Teilen Wasser gemahlen, bis eine deutliche Zunahme der Viskosität eintritt. Durch Zugabe von 2 Teilen des Natriumsalzes der 1-Naphthalinsulfonsäure wird die Dispersion verflüssigt. Nach Erreichen einer mittleren Teilchengrösse des Farbstoffes unter 2 µm wird die Dispersion von den Mahlkörpern getrennt und filtriert. Es resultiert eine stabile, leicht giessbare und sich nicht absetzende Aufbereitung, die bei Temperaturen von −20 bis +50°C stabil ist.

Ersetzt man den oben genannten Dispersionsfarbstoff durch andere Dispersionsfarbstoffe, wie sie z.B. in der GB-A-1 221 126 genannt sind, und verfährt im übrigen wie oben beschrieben, so erhält man ähnlich gute Dispersionen. Sie eignen sich in Form wässriger oder wässrig-organischer Drucktinten für den Druck auf synthetische Textilien oder den Druck auf Papier zur Herstellung von Zwischenträgern für den Sublimationstransferdruck. Sie eignen sich aber

auch für die Verwendung in üblichen Auszieh- und Imprägnierverfahren zum Färben synthetischer Textilien.

*Beispiel 2*

50 Teile des Azofarbstoffes der Formel

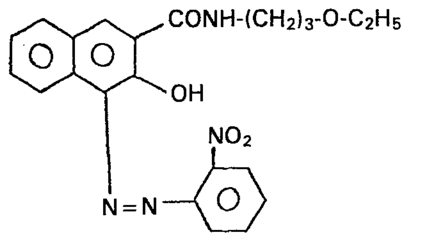

werden in einer Rührwerkskugelmühle in Gegenwart von 300 Teilen Glaskugeln von 1 mm Durchmesser in einer Lösung von 15 Teilen Sorbit, 1 Teil Poly-N--vinyl-2-pyrrolidon vom mittleren Molekulargewicht 40 000 und 1 Teil Ammoniumbutylnaphthalinsulfonat in 34 Teilen Wasser gemahlen, bis die Teilchengrösse des Farbstoffes unter 2 $\mu$m liegt. Nach Abtrennen der Mahlkörper erhält man eine stabile, sich nicht absetzende, giessbare Paste, die auch bei längerer Lagerung bei Temperaturen bis zu 60°C ihre Konsistenz nicht verändert.

Verwendet man anstelle des oben genannten Farbstoffes andere in der DE-A-2 841 562 genannte Farbstoffe und verfährt im übrigen wie oben beschrieben, so erhält man ähnlich gute Präparate. Anstelle von Sorbit können gleiche Mengen Harnstoff, Mono- oder Dipropylenglykol oder Diäthylenglykolmonomethyläther verwendet werden.

*Beispiel 3*

50 Teile 1-Amino-2-methoxy-4-nitrobenzol werden in einer Rührwerkskugelmühle mit 100 Teilen Glaskugeln von 1 mm Durchmesser in einem Gemisch aus 35 Teilen Wasser, 15 Teilen Sorbit und 0,5 Teilen Poly-N-vinyl-2-pyrrolidon gemahlen, bis die Teilchengrösse der Aminoverbindung unter 1 $\mu$m liegt. Dann setzt man dem erhaltenen Teig noch 1 Teil Isobutylnaphthalinsulfonat hinzu und trennt die Mahlkörper ab. Der Teig bleibt bis 60°C flüssig und giessbar.

Ersetzt man das Poly-N-vinyl-2-pyrrolidon durch Polyvinylalkohol, Methylcellulose oder durch ein Kondensationsprodukt aus 1 Mol Cetylalkohol und 20 Mol Äthylenoxid und verfährt im übrigen wie beschrieben, so erhält man Präparationen, die beim Erwärmen über 40°C zu einem Gel erstarren.

Der nach obigen Angaben erhaltene Teig lässt sich mit Wasser und Säure verdünnen und durch Zusatz von Nitrit bei Raumtemperatur sehr schnell und in hoher Ausbeute diazotieren und mit Naphtholen kuppeln.

*Beispiel 4*

40 Teile Permanentgelb HR werden unter Verwendung von 300 Teilen Zirkoniumoxidkugeln in einer Rührwerkskugelmühle in einem Gemisch aus 37,5 Teilen Wasser, 20 Teilen einer 70%igen Sorbitlösung, 0,5 Teilen Poly-N-vinyl-2-pyrrolidon und 1 Teil Isopropylnaphthalinsulfonat gemahlen, bis die mittlere Teilchengrösse des Pigments unter 1 $\mu$m liegt. Es resultiert ein leicht thixotroper, stabiler und giessbarer Teig.

Verwendet man anstelle von Permanentgelb HR entsprechende Mengen Russ, Dichlorisodibenzanthron, Dichlorindanthron, 2-Pyridylamino-4,6-dianthrachinonylamino-triazin, 2-Chlor-4,6-diisopropylamino-triazin oder 2,5-Di-(benzoxazolyl)-(2')-thiophen und verfährt im übrigen wie beschrieben, so erhält man ähnlich gute, stabile, giessbare Dispersionen.

*Beispiel 5*

Man löst 10 Teile Poly-N-vinyl-2-pyrrolidon, 10 Teile Natriumxylolsulfonat, 10 Teile Formaldehyd und 150 Teile d-Sorbit in 400 Teilen Wasser. In diese Lösung werden 400 Teile des Monoazofarbstoffes der Formel

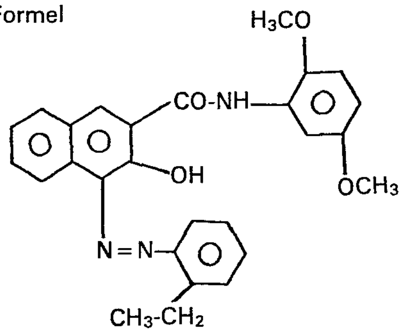

eingetragen. Nach Homogenisieren wird die erhaltene Aufschlämmung in einer mit Glaskugeln von 1 bis 2 mm Durchmesser gefüllten Rührwerkskugelmühle so lange gemahlen, bis die durchschnittliche Teilchengrösse des Farbstoffes unter 5 $\mu$m liegt. Nach Abtrennung der Mahlkörper resultiert eine lagerstabile, leicht giessbare Dispersion, die 40 Gew.-% Farbstoff enthält.

Ersetzt man in obigem Beispiel das Natriumxylolsulfonat durch eine gleiche Menge Natriumnaphthalin-1-sulfonat, so erhält man ein gleich gutes Resultat.

Die Dispersionen eignen sich vorzüglich für das Bedrucken von textilen Gebilden aus aromatischen Polyestern auch unter Verwendung körperarmer Acrylatverdickungen. Körperarme Verdickungen sind bekanntlich solche, bei denen mit verhältnismässig wenig Verdickungsmittel eine starke Verdickungswirkung erzielt wird.

*Beispiel 6*

10 Teile Poly-N-vinyl-2-pyrrolidon, 10 Teile Natrium-1-naphthalinsulfonat und 175 Teile d-Sorbit werden in 430 Teilen Wasser gelöst. In diese Lösung trägt man 375 Teile 4,4'-Dichlor-2-amino-diphenyläther ein. Nach Homogenisieren wird die erhaltene Aufschlämmung in einer mit Glaskugeln von 1 bis 2 mm Durchmesser gefüllten Rührwerkskugelmühle so lange gemahlen, bis die durchschnittliche Teilchengrösse der Aminoverbindung unter 5 $\mu$m liegt. Nach Abtrennung der Mahlkörper resultiert eine stabile, leicht giessbare Dispersion, die 37 Gew.-% Aminoverbindung enthält.

Zur Diazotierung werden 10 Teile der oben erhaltenen Dispersion, 60 Teile Wasser von 10 bis 15°C und 0,2 Teile Natriumnitrit miteinander unter Rühren vermischt. Alsdann werden 10 Teile 35%iger Salzsäure zugesetzt. Nach kurzem Umrühren ist die Diazotierung beendet; man erhält eine stabile, rückstandfreie Diazolösung. Im Vergleich hierzu dauert die Diazotierung eines herkömmlichen, pulverförmigen Handelsprodukts länger als 60 Minuten, wobei infolge der langsam verlaufenden Reaktion ein Zusatz von Eis erforderlich ist.

Ersetzt man in obigem Beispiel den 4,4'-Dichlor-2--amino-diphenyläther durch die gleiche Menge an 3,2'-Dimethyl-4-amino-1,1'-azobenzol, oder, nach Abzug einer entsprechenden Menge Wasser, durch 50 Teile 1-Amino-2-methoxy-4-nitrobenzol, so erhält man ebenfalls Dispersionen mit ausgezeichneter Lagerfähigkeit und gleich guter Diazotierbarkeit.

Ersetzt man in den genannten Formulierungen das Natrium-1-naphthalinsulfonat durch gleiche Mengen des Dispergiermittels, das durch Kondensation von 2 Mol Natrium-2-naphthalinsulfonat mit 1 Mol Formaldehyd hergestellt wird, so erhält man nach Diazotierung instabile Diazolösungen, die Niederschläge enthalten und daher für eine weitere Verwendung unbrauchbar sind.

**Patentansprüche**

1. Hochkonzentrierte, lagerstabile und wärmebeständige, fliessfähige, wässrige Dispersion von in Wasser schwer- bis unlöslichen Wirksubstanzen, die folgende Komponenten enthält:

a) 30 bis 60 Gew.-% mindestens einer in Wasser schwer- bis unlöslichen Wirksubstanz mit einer mittleren Teilchengrösse unter 5 $\mu$m,

b) 0,1 bis 5 Gew.-% eines wasserlöslichen Poly-N-vinyllactams oder eines wasserlöslichen Copolymers von mindestens zwei verschiedenen N-Vinyl--lactamen oder eines wasserlöslichen Copolymers von mindestens einem N-Vinyl-lactam mit mindestens einer anderen, mit dem N-Vinyl-lactam copolymerisierbaren Verbindung,

c) 0,1 bis 5 Gew.-% mindestens eines keinen Dispergiermittelcharakter aufweisenden wasserlöslichen Alkali- oder Ammoniumsalzes einer aromatischen Mono-, Di- oder Trisulfonsäure, die durch Alkylgruppen mit bis zu 8 C-Atomen oder durch eine Cycloalkylgruppe mit bis zu 6 C-Atomen substituiert sein kann,

d) 0 bis 30 Gew.-% mindestens eines Wasserrückhaltemittels und

e) Wasser.

2. Dispersion nach Anspruch 1, dadurch gekennzeichnet, dass die wasserunlösliche(n) Wirksubstanz(en) Farbstoffe, Farbstoffvorprodukte, Pigmente und/oder optische Aufheller sind.

3. Dispersion nach Anspruch 1 oder 2, dadurch gekennzeichnet, dass die Alkali- oder Ammoniumsalze aromatische Mono-, Di- oder Trisulfonate sind, die von Nitro- und Carboxylgruppen frei sind und höchstens 4 Kohlenstoffatome pro Alkylgruppe bzw. 6 Kohlenstoffatome pro Cycloalkylgruppe enthalten.

4. Dispersion nach einem der Ansprüche 1 bis 3, dadurch gekennzeichnet, dass die Komponente b) Poly-N-vinyl-2-pyrrolidon ist.

5. Dispersion nach einem der Ansprüche 1 bis 4, dadurch gekennzeichnet, dass die Komponente d) ein Glykol und/oder Glykoläther ist.

6. Dispersion nach einem der Ansprüche 1 bis 5, dadurch gekennzeichnet, dass die Dispersion jeweils 0,5 bis 2 Gew.-% der Komponenten b) und c) enthält.

7. Verfahren zur Herstellung von Dispersionen nach einem der Ansprüche 1 bis 6, dadurch gekennzeichnet, dass man, bezogen auf die fertige Dispersion, 30 bis 60 Gew.-% der Komponente a) in Gegenwart von 0,1 bis 5 Gew.-% der Komponente b), 0,1 bis 5 Gew.-% der Komponente c) und bis zu 30 Gew.-% der Komponente d) einer Nassmahlung unterwirft, bis die mittlere Teilchengrösse der Komponente a) unter 5 $\mu$m liegt.

8. Verfahren nach Anspruch 7, dadurch gekennzeichnet, dass man die Nassmahlung fortsetzt, bis die mittlere Teilchengrösse der Komponente a) unter 1 $\mu$m liegt.

9. Verfahren zum Veredeln von Kunststoffen, Papier oder Textilien, dadurch gekennzeichnet, dass man als Veredlungsmittel eine Dispersion nach einem der Ansprüche 1 bis 6 verwendet.

10. Veredelte Kunststoffe, veredeltes Papier oder veredelte Textilien, erhalten nach dem Verfahren gemäss Anspruch 9.

**Claims**

1. A highly concentrated stable heat-resistant fluid aqueous dispersion of sparingly water-soluble to water-insoluble active substances that contains the following components:

a) 30 to 60% by weight of at least one sparingly water-soluble to water-insoluble active substance having a mean particle size of less than 5 $\mu$m,

b) 0.1 to 5% by weight of a water-soluble poly-N-vinyllactam or of a water-soluble copolymer of at least two different N-vinyllactams or of a water-soluble copolymer of at least one N-vinyllactam with at least one other compound which is copolymerisable with the N-vinyllactam,

c) 0.1 to 5% by weight of at least one water-soluble alkali metal salt or ammonium salt which has no dispersant characteristics and is derived from an aromatic mono-, di- or trisulphonic acid which can be substituted by alkyl groups having up to 8 C atoms or by a cycloalkyl group having up to 6 C atoms,

d) 0 to 30% by weight of at least one water-retention agent, and

e) water.

2. The dispersion of Claim 1, characterised in that the water-insoluble active substance(s) are dyestuffs, dyestuff precursors, pigments and/or fluorescent brighteners.

3. The dispersion of Claim 1 or 2, characterised in that the alkali metal or ammonium salts are aromatic mono-, di- or trisulphonates which are free of nitrile and carboxyl groups and which contain at most 4 carbon atoms per alkyl group or 6 carbon atoms per cycloalkyl group.

4. The dispersion of any one of Claims 1 to 3, characterised in that component b) is poly-N-vinyl-2--pyrrolidone.

5. The dispersion of any one of Claims 1 to 4, characterised in that component d) is a glycol and/or glycol ether.

6. The dispersion of any one of Claims 1 to 5, characterised in that the dispersion contains 0.5 to 2% by weight each of components b) and c).

7. A process for preparing dispersions of any one of Claims 1 to 6, characterised in that, relative to the finished dispersion, 30 to 60% by weight of component a) are subjected to wet-grinding in the presence of 0.1 to 5% by weight of component b), 0.1 to 5% by weight of component c) and up to 30% by weight of component d) until the mean particle size of component a) is less than 5 $\mu$m.

8. The process of Claim 7, characterised in that the wet-grinding is continued until the mean particle size of component a) is less than 1 $\mu$m.

9. A process for the chemical treatment of plastics, paper or textiles, characterised in that the chemical treatment agent used is a dispersion of any one of Claims 1 to 6.

10. Chemically treated plastics, chemically treated paper or chemically treated textiles obtained by the process of Claim 9.

**Revendications**

1. Dispersion aqueuse fluide, stable au stockage et résistant à la chaleur, hautement concentrée de substances actives peu solubles à insolubles dans l'eau, qui contient les constituants suivants:

a) 30 à 60% en poids d'au moins une substance active peu soluble à insoluble dans l'eau ayant une taille moyenne de particules inférieure à 5 $\mu$m,

b) 0,1 à 5% en poids d'un poly-N-vinyl-lactame soluble dans l'eau ou d'un copolymère soluble dans l'eau d'au moins deux N-vinyl-lactames différents ou d'un copolymère soluble dans l'eau d'au moins un N-vinyl-lactame avec au moins un autre composé copolymérisable avec le N-vinyl-lactame,

c) 0,1 à 5% en poids d'au moins un sel alcalin ou d'ammonium d'un acide mono-, di- ou trisulfonique aromatique soluble dans l'eau ne présentant aucun caractère d'agent dispersant, qui peut être substitué par des groupes alcoyle ayant jusqu'à 8 atomes de C ou par un groupe cycloalcoyle ayant jusqu'à 6 atomes de C,

d) 0 à 30% en poids d'au moins un agent de rétention de l'eau et

e) de l'eau.

2. Dispersion selon la revendication 1, caractérisée en ce que la ou les substance(s) active(s) insolubles dans l'eau sont des colorants, des produits intermédiaires de colorants, des pigments et/ou des azurants optiques.

3. Dispersion suivant la revendication 1 ou 2, caractérisée en ce que les sels alcalins ou d'ammonium sont des mono-, di- ou trisulfonates aromatiques qui sont exempts de groupes nitro et carboxyle et contiennent au maximum 4 atomes de carbone par groupe alcoyle ou 6 atomes de carbone par groupe cycloalcoyle.

4. Dispersion suivant l'une quelconque des revendications 1 à 3, caractérisée en ce que le constituant b) est de la poly-N-vinyl-2-pyrrolidone.

5. Dispersion suivant l'une quelconque des revendications 1 à 4, caractérisée en ce que le constituant d) est un glycol et/ou un éther de glycol.

6. Dispersion suivant l'une quelconque des revendications 1 à 5, caractérisée en ce que la dispersion contient 0,5 à 2% en poids de chacun des constituants b) et c).

7. Procédé de préparation de dispersions selon l'une quelconque des revendications 1 à 6, caractérisé en ce qu'on soumet à un broyage au mouillé, par rapport à la dispersion finie, 30 à 60% en poids du constituant a) en présence de 0,1 à 5% en poids du constituant b), 0,1 à 5% en poids du constituant c) et jusqu'à 30% en poids du constituant d), jusqu'à ce que la taille moyenne de particules du constituant a) soit inférieure à 5 $\mu$m.

8. Procédé suivant la revendication 7, caractérisé en ce qu'on poursuit le broyage au mouillé jusqu'à ce que la taille moyenne de particules du constituant a) soit inférieure à 1 $\mu$m.

9. Procédé d'apprêt de matières plastiques, du papier ou de textiles, caractérisé en ce qu'on utilise comme agent d'apprêt une dispersion suivant l'une des revendications 1 à 6.

10. Matières plastiques apprêtées, papier apprêté ou textiles apprêtés, obtenus selon le procédé suivant la revendication 9.